# EUROPEAN PATENT SPECIFICATION

(11) **EP 4 110 502 B1**
(45) Date of publication and mention of the grant of the patent: **11.09.2024**
(21) Application number: 21713510.2
(22) Date of filing: 26.02.2021
(51) Int. Cl.: B01D 33/067, B01D 33/073

(54) **AN ENGAGEMENT ASSEMBLY FOR ENGAGING A FILTER PLATE OF A ROTARY DRUM FILTER, A FILTER DECK ASSEMBLY AND A ROTARY DRUM FILTER**
EINSATZANORDNUNG ZUM EINGRIFF MIT EINER FILTERPLATTE EINES DREHTROMMELFILTERS, FILTERDECKANORDNUNG UND DREHTROMMELFILTER
ENSEMBLE D'ENGAGEMENT POUR ENGAGER UNE PLAQUE FILTRANTE D'UN FILTRE À TAMBOUR ROTATIF, ENSEMBLE PLATEAU DE FILTRE ET FILTRE À TAMBOUR ROTATIF

(30) Priority: 28.02.2020 US 202062982837 P
(43) Date of publication of application: 04.01.2023
(73) Proprietor: Andritz Inc., Alpharetta, GA 30004 (US)
(72) Inventor: TOWNSON, Jacob, Alpharetta, Georgia 30004 (US); STUBBLEFIELD, Kent, Alpharetta, Georgia 30004 (US); HARRINGTON, Anthony, Alpharetta, Georgia 30004 (US); GRACE, Todd, Alpharetta, Georgia 30004 (US)
(74) Representative: Hoffmann Eitle
(86) International application number: PCT/US2021/019836
(87) International publication number: WO 2021/173945

(56) References cited:
- US-A- 2 724 507
- US-B2- 9 669 337

## Description

### BACKGROUND

Unless otherwise indicated herein, the materials described in this section are not prior art to the claims in this application and are not admitted to be prior art by inclusion in this section.

Several industries utilize rotary drum filters to separate filtrate from residue on a large scale. A typical rotary drum filter generally comprises a cylindrical drum mounted on a rotational axis for rotation in a tank or vat filled with a slurry. The cylindrical drum comprises several divisions (i.e., cylindrical sectors) arrayed around the rotational axis. The radially outward surfaces of the divisions define a filter deck assembly. In practice, operators maintain a pressure differential between the inside and the outside of the drum. That is, the interior of the drum is generally maintained at sub-atmospheric pressure. As a given filter deck assembly on a given division rotates through the slurry, the pressure differential pulls filtrate through the filter deck assembly. The residue from the filtrate accumulate on the outer surface of the filter deck assembly. This accumulated residue may be referred to as a "pulp mat," a sediment "cake," or by other names depending upon the slurry that the rotary drum filter separates. When a division rotates above the slurry level, the pressure differential continues to pull entrapped liquid from the accumulated residue and thereby begins to dry the accumulated residue.

The filtrate flows through the filter deck assembly toward the rotational axis. The filtrate then flows out of a supportive trunnion into a drop leg. The filtrate flowing down through the drop leg creates the vacuum pressure. A stationary valve also sits in the trunnion upstream of the drop leg. The valve has a first end positioned at approximately the 12 o'clock position (i.e., the apex of rotation when the rotary drum filter is operational) and a second end positioned approximately between the 3 o'clock position (i.e., halfway along the downward rotational journey) and the 5 o'clock position (i.e., several degrees before the nadir of rotation). As a division rotates past the apex, the valve blocks the portion of the division that exits into the trunnion, thereby releasing vacuum pressure along the arc of the valve.

A doctor blade, roller, belt, or other apparatus removes the accumulated residue from the filter deck assembly on the now pressure-equalized division. Typically, additional equipment then collects this residue for further processing. The now cleaned filter deck assembly continues to rotate downwardly toward the slurry. As the division rotates past the end of the valve, the valve no longer blocks the portion of the division that exits into the trunnion and the sub-atmospheric pressure is again applied, thereby permitting the process to repeat as the division rotates through the slurry.

While the rotary drum filter design endures, the traditional design of the filter deck assembly contributes to problems that can lead to production loss. Traditional filter deck assemblies comprise corrugated filter plates. Each filter plate spans one or more grid supports. The respective filter plate ends engage a top hat-shaped mounting clip mounted on a grid support. Installers and servicers weld at least one end of the filter plate to a mounting clip to prevent filtrate from leaking back into the vat when the filter plate rotates downwardly. The "top hat" mounting clips also have a cap strip welded on top of (i.e., radially outward of) each mounting clip to define a generally C-shaped recess. Each end of the filter plate rests in one of these C-shaped recesses. Installers and servicers spot weld or tungsten inert gas ("TIG") weld these cap strips to the mounting clips. Installers and servicers may also weld the ends of the filter plate to the mounting clip and/or cap strip to form a secure seal and fixedly install the filter plates. The filter plates, mounting clips, and cap strips, are typically all manufactured from stainless steel.

In practice, and depending upon the application, the temperature profile of the cylindrical drum may vary significantly, at least at startup. For example, if a rotary drum filter is used to dewater a pulp slurry, the starting temperature of the pulp slurry may be in a range of 82 degrees Celsius (°C) (180 degrees Fahrenheit (°F)) to 93 °C (200 °F) in a first stage vat. The filtered pulp generally cools to about 60 °C (about 140 °F) by the time it is removed from the drum. Likewise, the drum divisions that start in the vat will typically have a higher average temperature than the divisions that start above the vat. As the pulp mat rotates out of the vat, washers may spray the mat with water or other fluid to displace the entrapped slurry liquid. The expansion and contraction of the stainless steel in response to temperature fluctuations can stress the filter deck assembly welds, particularly the welds engaging the filter plates, mounting clips, and cap strips. Even though rotation and the materials of the cylindrical drum may eventually reduce the temperature differential over time, any remaining temperature differential will still stress the welds. If left unaddressed, excessive or prolonged periods of stress will lead to weld failure, which will reduce the efficiency of the rotary drum filter by allowing filtrate to flow back out of the filter deck assembly and into the vat.

Furthermore, processes that expose the welds to electronegative ions can also weaken the welds over time. For example, in bleach plant applications, the chlorine in bleach will attack the protective oxide layer of the stainless steel, and then attack the steel itself. Because substantially all structural components of the cylindrical drum are manufactured from stainless steel, all the steel in the drum will be attacked. Unlike rust, chloride-induced corrosion is not bulk corrosion. That is, once the chlorine wears through the protective oxide layer, the chlorine will concentrate in that area and continue to corrode the exposed steel. The induced stresses from welding, combined with built-in mechanical stresses from manufacturing and thermal cycling, make welds in particular a weakened initiation point for the corrosion. Once the corrosion starts, the reactive chloride ions tend to concentrate in these areas, thereby accelerating further corrosion. As a result, these welds create a greater potential for loose cap strips and deck panels (i.e., filter plates), torn or otherwise damaged face wire, and damage to doctor blades caused by the blades impacting the cap strips.

Deactivating the rotary drum filter to fix these problems results in production loss. Removing the welds to repair or rebuild the rotary drum filter can be time consuming and costly, which motivates some mill operators to delay shutdowns until there is a risk of imminent equipment failure. This practice results in reduced equipment production as the problems continue to develop. Furthermore, it takes more time to repair or rebuild a severely damaged rotary drum filter, thereby further exacerbating production loss.

Previously, others attempted to improve installation time such as with the design described in U.S. Pat. No. 9,669,337 to Giasson (hereinafter, "Giasson"), a document that discloses features falling under the preamble of claim 1. This design requires welding, gluing, or otherwise affixing the "top hat" mounting clips to the support grids and having a "snap in" cap strip. However, the "snap in" cap strip comprises a U-shaped piece and a generally planar top piece (i.e., a traditional cap strip) that is welded, glued, or otherwise fixedly engaged to the U-shaped piece. Furthermore, after installation, Giasson recommends welding or otherwise permanently engaging the removable cap strip into place. The presence of welds to secure: the mounting clips to the support grids, the components of the cap strip to one another, and optionally, the cap strip to the mounting clip does nothing to address the problem of weld failure in the filter deck assembly.
US 2,724,507 discloses a filter division strip.

### SUMMARY

The present invention provides an engagement assembly as recited in claim 1.
The present disclosure relates generally to rotary drum filters configured to filter slurries, and more particularly to filter plates in rotary vacuum drum washers, thickeners, and filters used in the pulp and paper, chemical recovery, waste separation, and mining industries. The problem of production loss due to weld fatigue in welds between filter plates and mounting clips in a filter plate assembly of a rotary drum filter can be mitigated by aspects of the present disclosure.

According to various aspects there is provided an engagement assembly for a rotary drum filter. In some aspects, the engagement assembly may include: a retaining clip having a body, a first shelf extending outwardly from the body in a first direction and a second shelf extending outwardly from the body in a direction opposite the first direction; and an S-clip having a major concave area configured to receive a leading end or a trailing end of a filter plate, and a minor concave area configured to receive the first shelf or the second shelf of the retaining clip.

According to various aspects there is provided a filter deck assembly for a rotary drum filter. In some aspects, the filter deck assembly may include: a filter plate having a leading end distally disposed from a trailing end; and an engagement assembly configured to engage the filter plate. The engagement assembly may include a retaining clip having a body, a first shelf extending outwardly from the body in a first direction and a second shelf extending outwardly from the body in a direction opposite the first direction. The engagement assembly may include an S-clip having a major concave area configured to receive the leading end or the trailing end of the filter plate, and a minor concave area configured to receive the first shelf or the second shelf of the retaining clip.

According to various aspects there is provided a rotary drum filter. In some aspects, the rotary drum filter may include a filter deck assembly, and grid supports configured to support the filter deck assembly. The filter deck assembly may include a filter plate having a leading end distally disposed from a trailing end, and an engagement assembly configured to engage the filter plate. The engagement assembly may include a retaining clip having a body, a first shelf extending outwardly from the body in a first direction and a second shelf extending outwardly from the body in a direction opposite the first direction, and an S-clip having a major concave area configured to receive the leading end or the trailing end of the filter plate, and a minor concave area configured to receive the first shelf or the second shelf of the retaining clip.

### BRIEF DESCRIPTION OF THE DRAWINGS

The foregoing will be apparent from the following more particular description of exemplary embodiments of the disclosure, as illustrated in the accompanying drawings in which like reference characters refer to the same parts throughout the different views. The drawings are not necessarily to scale, with emphasis instead being placed upon illustrating the disclosed embodiments.
FIG. 1 is a perspective view of a rotary drum filter.
FIG. 2 is a detailed perspective view of a portion of the deck assembly of FIG. 1.
FIG. 3 is a perspective view of an exemplary filter plate and an exemplary engagement assembly comprising an S-clip at both the leading end and the trailing end of the filter plate according to some aspects of the present disclosure.
FIG. 4 is a detailed view of the exemplary engagement assembly shown in FIG. 3 according to some aspects of the present disclosure.
FIG. 5 is a cross-sectional side view of an exemplary filter deck assembly exemplary engagement assembly according to some aspects of the present disclosure.

### DETAILED DESCRIPTION

The following detailed description of the preferred embodiments is presented only for illustrative and descriptive purposes and is not intended to be exhaustive or to limit the scope and spirit of the invention. The embodiments were selected and described to explain the principles and practical applications. Many variations can be made to the embodiments disclosed in this specification without departing from the scope of protection.

Corresponding reference characters indicate corresponding parts throughout the several views. Although the drawings represent embodiments of various features and components according to the present disclosure, the drawings are not necessarily to scale and certain features may be exaggerated in order to better illustrate embodiments of the present disclosure, and such exemplifications are not to be construed as limiting the scope of the present disclosure in any manner.

References in the specification to "one embodiment," "an embodiment," "an exemplary embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Although specific terms are used in the following description for the sake of clarity, these terms are intended to refer only to the particular structure of the embodiment selected for illustration in the drawings, and are not intended to define or limit the scope of the disclosure.

The singular forms "a," "an," and "the" include plural referents unless the context clearly dictates otherwise. Numerical values should be understood to include numerical values which are the same when reduced to the same number of significant figures and numerical values which differ from the states value by less than the experimental error of conventional measurement technique of the type described in the present application to determine the value.

All ranges disclosed herein are inclusive of the recited endpoint and are independently combinable (for example, the range "from 2 grams to 10 grams" is inclusive of the endpoints, 2 grams and 10 grams, and all intermediate values.

As used herein, approximating language may be applied to modify any quantitative representation that may vary without resulting in a change in the basic function to which it is related. Accordingly, a value modified by a term or terms, such as "about," "approximately," and "substantially," may not be limited to the precise values specified. The modifier "about" should also be considered as disclosing the range defined by the absolute values of the two endpoints. For example, the expression "from about 212 °F to about 1300 °F" also discloses the range "from 212 °F to 1300 °F."

It should be noted that many of the terms used herein are relative terms. For example, the terms "upper" and "lower" are relative to each other in location, i.e., an upper component is located at a higher elevation than a lower component in a given orientation, but these terms can change if the device is flipped. The terms "inlet' and "outlet" are relative to a fluid flowing through them with respect to a given structure, e.g., a fluid flows through the inlet into the structure and flows through the outlet out of the structure. The terms "upstream" and "downstream" are relative to the direction in which a fluid flows through various components, i.e., the flow of fluids through an upstream component prior to flowing through the downstream component.

The terms "horizontal" and "vertical" are used to indicate direction relative to an absolute reference, e.g., ground level. However, these terms should not be construed to require structure to be absolutely parallel or absolutely perpendicular to each other. For example, a first vertical structure and a second vertical structure are not necessarily parallel to each other. The terms "top" and "bottom" or "base" are used to refer to locations/surfaces where the top is always higher than the bottom/base relative to an absolute reference, e.g., the surface of the earth. The terms "upwards" and "downwards" are also relative to an absolute reference; an upwards flow is always against the gravity of the earth.

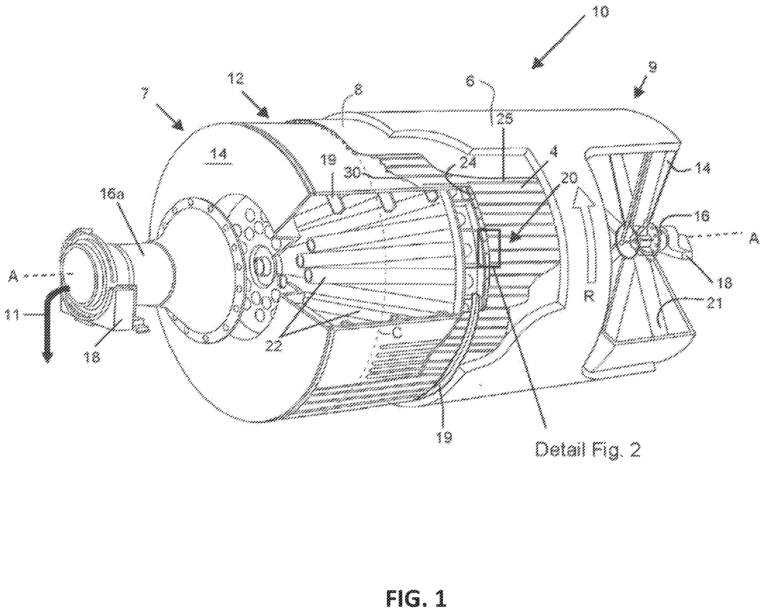

Fig. 1 is a perspective view of a rotary drum filter 10. The rotary drum filter 10 may be, for example, a vacuum washer used in the pulp and paper industry. Although designs can vary, a typical rotary drum filter 10 includes a cylindrical drum 12 disposed in a vat (not shown). Closure plates 14 bound each end 7, 9 of the drum 12. Support ribs 21 extend generally radially outward from structures surrounding the axis of rotation toward the outer circumference of the drum 12. Multiple ring supports 19 support the filter deck assembly 20. A trunnion 16 extends from each end 7, 9 of the drum 12 and rotatably mounts the drum 12 to adjacent bearing and pedestal assemblies 18. One of the trunnions 16a is hollow and connects to a drop leg (not shown). During operation, the drop leg pulls air through the drum and thereby draws filtrate 11 through the rotary drum filter 10 under vacuum. A number of filtrate conduits 22 disposed between the hollow trunnion 16a and the filtrate chambers 24 allow filtrate 11 to fluidly communicate with the drop leg.

A screen 8, typically a wire mesh (also referred to as a "face wire"), cloth, synthetic textile, or plastic screen encircles the drum 12. In operation, the vat is filled with a slurry. In FIG. 1, the drum 12 rotates in rotational direction R, which in this example is counter-clockwise. As divisions of the drum 12 rotate through the vat, the vacuum pressure facilitates the accumulation of residue 6 on the screen 8. As the drum division continues to rotate above the slurry level, filtrate 11 percolates through the filter deck assembly 20 and eventually flows through the filtrate conduits 22 into the drop leg. As the drum 12 continues to rotate, the residue 6 begins to dry and a doctor blade, belt, roller, or other device (not shown) eventually scrapes the residue 6 from the screen 8 before that section of the screen 8 rotates back into the slurry to repeat the process.

When the rotary drum filter 10 is a vacuum washer used in the pulp and paper industry, the slurry is a typically a mixture of pulp and water called a "pulp stock." The residue 6 on the screen are typically known as a "pulp mat." In mineral processing, the rotary drum filter may be known as a thickener. The residue 6 is typically cakes of mineral sediment. For example, lime mud filters are typically used to recover lime from spent pulp and paper liquors. In a lime mud filter, the filtrate 11 typically comprises water and the residue 6 comprises lime mud.

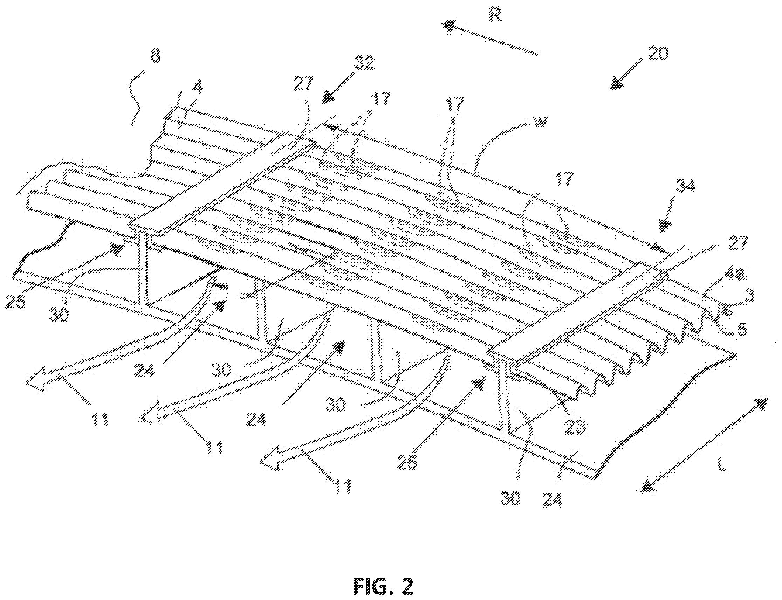

FIG. 2 is a detailed perspective view of a portion of the filter deck assembly 20 of FIG. 1. The screen 8 rests atop an array of filter plates 4. The filter plates 4 are typically corrugated filter plates 4a having a plurality of ridges 3 and channels 5. Corrugated filter plates 4a are generally preferred because the corrugations increase the surface area available for holding excess filtrate 11 and thereby permit the rotary drum filter 10 to rotate at higher speeds than would typically be achievable in a rotary drum filter 10 having a comparatively flat filter plate (i.e., a filter plate that curves slightly to match the arc of the drum, but that is otherwise flat). Furthermore, the corrugations easily expand or contract slightly to accommodate thermal expansion. Each filter plate 4 has a width W and a length L. The filter plate 4 has areas defining multiple drainage slots 17 disposed throughout the filter plate 4. When the filter plate 4 is a corrugated filter plate 4a, the multiple drainage slots 17 are disposed in the channels 5. The drainage slots 17 may be louvered to collect pools of filtrate 11 on the downturn.

The filter plate 4 spans one or more grid supports 30. Adjacent grid supports 30 and the filter plate 4 define one or more filtrate chambers 24. In operation, filtrate 11 flows through the screen 8 and through the drainage slots 17 on the upturn and part of the downturn. The filtrate 11 then flows through the filtrate chambers 24 before flowing further to the filtrate conduits 22 and drop leg.

The filter plate 4 further comprises a leading end 32 and a trailing end 34. The leading end 32 is the end that first exits the slurry when the particular section of the filter plate 4 is moving upward toward the apex of rotation and the leading end 32 is likewise the first end to fall back under the level of the slurry when the section of the filter plate 4 is moving downward toward the nadir of rotation. Similarly, the trailing end 34 is distally disposed from the leading end 32. The trailing end 34 is the second end to exit the slurry when the filter plate 4 is moving toward the apex of rotation. It will be understood that if an operator reverses the direction of rotation, the "leading ends" and the "trailing ends" designations will likewise reverse.

The respective ends 32, 34 of the filter plates 4 engage a "top hat"-shaped mounting clip 25 mounted on a grid support 30. In the past, installers and servicers have welded or otherwise rigidly affixed at least one end 32 or 34 of the filter plate 4 to a mounting clip 25 to prevent filtrate 11 from leaking back out of the filter plate 4 when the filter plate 4 is on the downturn. The top hat mounting clips 25 also have a cap strip 27 welded or otherwise rigidly affixed to each mounting clip 25. In practice, installers and services spot weld or TIG weld these cap strips 27 to the mounting clips 25. The recess 23 (i.e., the generally C-shaped feature) created by the mounting clip 25 and the cap strip 27 also secures the ends 32, 34 of the filter plates 4 to the drum 12.

In practice, Applicant has discovered that the rigidly affixed cap strips 27 create ongoing maintenance problems. The rigidly affixed cap strip 27 prevent a servicer from easily accessing and removing or replacing the filter plate 4. Additionally, if the cap strips 27 have been welded to the mounting clips 25, the environment within the rotary drum filter 10 can lead to weld fatigue and corrosion. In extreme cases, broken welds create loose cap strips 27 and filter plates 4, which can damage the doctor blades, rollers, belts, or other device configured to remove the residue 6 from the screen 8. The loose cap strips 27 or filter plates 4 can likewise tear or otherwise damage the screen 8. This permits filtrate 11 to flow both between drum divisions and back out of filter plate 4 and screen 8, thereby reducing the overall efficiency of the system. To address these problems, several exemplary embodiments, combinations of which are all considered to be within the scope of in this disclosure, are presented.

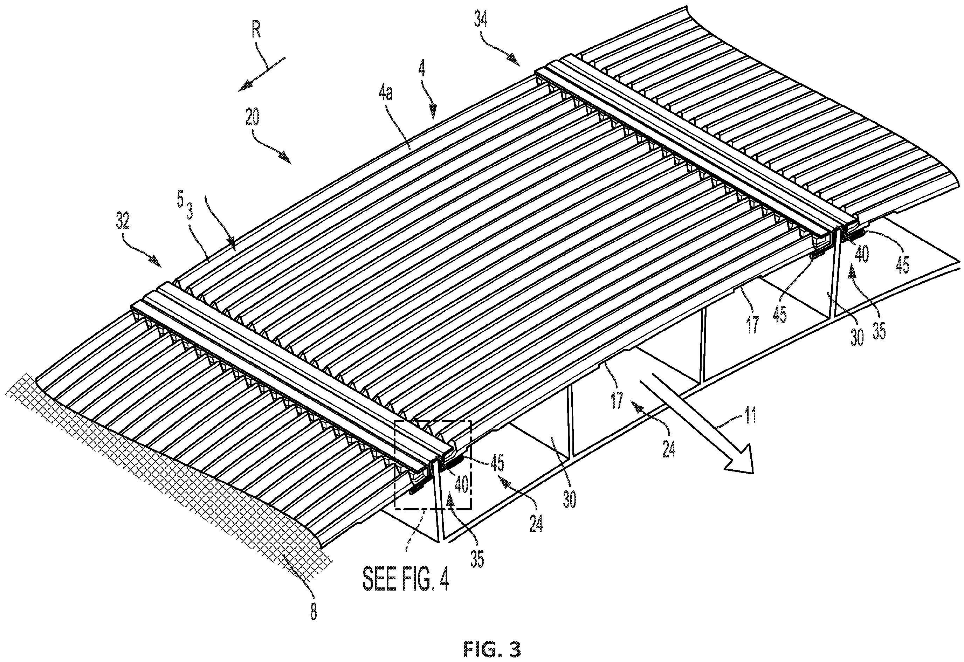

FIG. 3 is a perspective view of an exemplary filter plate and an exemplary engagement assembly comprising an S-clip at both the leading end and the trailing end of the filter plate according to some aspects of the present disclosure. Referring to FIG. 3, the filter deck assembly 20 may include a filter plate 4 having a leading end 32 distally disposed from a trailing end 34, an engagement assembly 35 configured to engage the filter plate. The engagement assembly 35 may include an "S" shaped clip 45 (also referred to herein as an S-clip), and a retaining clip 40.

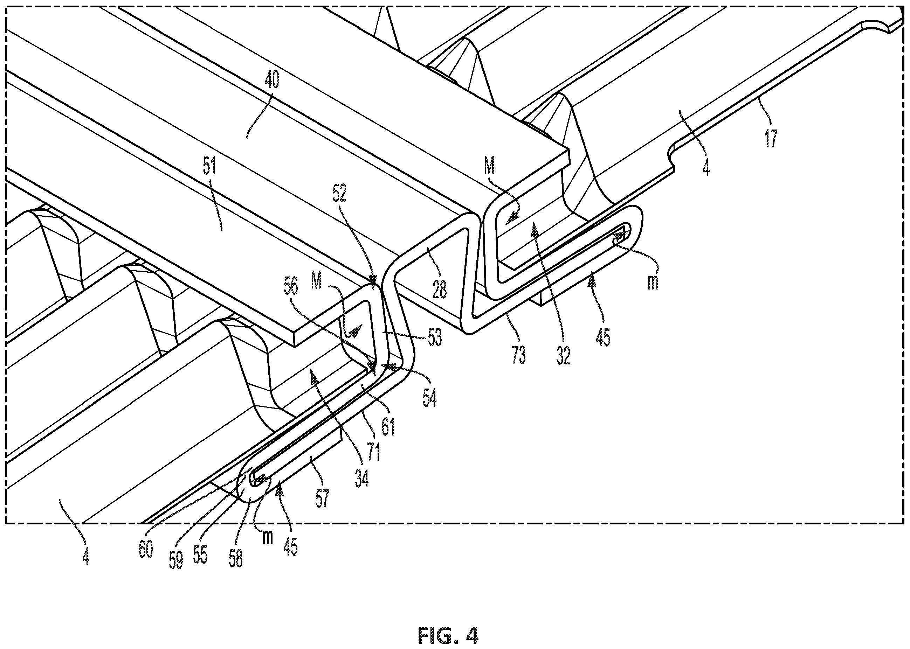

FIG. 4 is a detailed view of the exemplary engagement assembly 35 shown in FIG. 3 according to some aspects of the present disclosure. Referring to FIG. 4, the retaining clip 40 may include a body 28, a first shelf 71, and a second shelf 73. Both the first shelf 71 and the second shelf 73 may extend outwardly from the body 28. A major concave area "M" of the S-clip 45 may be configured to receive the leading end 32 or the trailing end 34 of the filter plate 4. A minor concave area "m" of the S-clip 45 may be configured to receive the first shelf 71 or the second shelf 73 of the retaining clip 40.

As illustrated in FIG. 4, the exemplary S-clip 45 defines the major concave area M adjacently disposed to the minor concave area m. The minor concave area m may be separated from the major concave area M by a horizontal body strip 61 of the S-clip 45. The minor concave area m may be disposed in a direction that is opposite of a direction of the major concave area M. That is, the opening of the minor concave area m may face the opposite direction from the opening of the major concave area M.

The S-clip 45 may include a first horizontal strip 51 configured to engage a first vertical strip 53 at a first end 52 of the first vertical strip 53. A second end 54 of the first vertical strip 53 may be configured to engage a first end 56 of a horizontal body strip 61. The first end 52 of the first vertical strip 53 may be distally disposed from the second end 54 of the first vertical strip 53. The first horizontal strip 51, the first vertical strip 53, and the first horizontal body strip 61 may define the major concave area M.

The S-clip 45 may further include a second horizontal strip 57 configured to engage a second vertical strip 55 at a first end 58 of the second vertical strip 55. A second end 59 of the second vertical strip 55 may be configured to engage a second end 60 of the horizontal body strip 61, wherein the second end 60 of the horizontal body strip 61 may be distally disposed from the first end 56 of the horizontal body strip 61. The second end 59 of the second vertical strip 55 may be distally disposed from the first end 58 of the second vertical strip. The second horizontal strip 57, the second vertical strip 55, and the horizontal body strip 61 may define the minor concave area m.

The leading end 32 of the filter plate 4 or the trailing end 34 of the filter plate 4 may be inserted into the major concave area M of the S-clip 45, and the major concave area M of the S-clip 45 may be configured to receive the leading end 32 of the filter plate 4 or the trailing end 34 of the filter plate 4. For example, the leading end 32 and the trailing end 34 of the filter plate 4 may be tapered such that the leading end 32 is retained within the major concave area M of the S-clip 45 while being supported by a horizontal body strip 61 of the S-clip 45. The minor concave area m of the S-clip 45 that supports the trailing end 34 of the filter plate 4 may engage the first shelf 71 of the retaining clip 40 such that the horizontal body strip 61 of the S-clip 45 and the second horizontal strip 57 of the S-clip 45 contact the first shelf 71 of the retaining clip 40. Similarly, The minor concave area m of the S-clip 45 that supports the leading end 32 of the filter plate 4 may engage the second shelf 73 of the retaining clip 40 such that the horizontal body strip 61 of the S-clip 45 and the second horizontal strip 57 of the S-clip 45 contact the second shelf 73 of the retaining clip 40. During installation of the filter plate 4, the leading end 32 filter plate 4 or the trailing end 34 of the filter plate 4 may be slid into the major concave area M of the S-clip 45. Alternatively, the leading end 32 or the trailing end 34 of the filter plate 4 may be angled into the major concave area M of the S-clip 45 laterally.

The height of the major concave area M may be greater than the height of the leading end 32 of the filter plate 4 and the trailing end 34 of the filter plate 4 so as to secure the leading end 32 of the filter plate 4 and the trailing end 34 of the filter plate 4 into the major concave area M of the S-clip 45 when the filter plate 4 is installed in the filter deck assembly 20. The major concave area M may surround the top, lateral end, and bottom portions of the leading end 32 of the filter plate 4 and/or the trailing end 34 of the filter plate 4, and may prevent edges of the leading end 32 and/or the trailing end 34 from contacting the screen 8 thereby preventing such edges from piecing holes in the screen 8. Holes in the screen 8 contribute to production loss. The deepest portion of the minor concave area m may extend beyond the end of the horizontal strip 51 defining the major concave area M, and the deepest portion of the major concave area M may extend beyond the second horizontal strip 57 defining minor concave area m.

In conventional rotary drum filters, the "top hat" mounting clip 25 is welded to a grid support 30. The S-clip 45 of the present disclosure slides onto one of the shelves (e.g., the first shelf 71 or the second shelf 73) of the retaining clip 40 without the use of welds or other fastener. Another advantage of the present disclosure is that there is no longer a need for cap strips, thereby reducing the overall welds in the filter deck assembly and potentially extending the useful life of the assembly. The minor concave area m of the S-clip 45 is configured to receive first shelf 71 or the second shelf 73 of the retaining clip 40. Alternatively, the first shelf 71 or the second shelf 73 of the retaining clip 40 may be pushed into the minor concave area m of the S-clip 45 laterally. In this manner, the minor concave area m of the S-clip 45 is also configured to receive the first shelf 71 or the second shelf 73 of the retaining clip 40.

The height of the minor concave area m may be greater than the height of the first shelf 71 or the second shelf 73 of the retaining clip 40 so as to secure the first shelf 71 or the second shelf 73 of the retaining clip 40 into the minor concave area m when the S-clip 45 is installed in the filter deck assembly 20.

In some exemplary embodiments, the S-clip 45 may be constructed from stainless steel or a polymer configured to be resistant to heat up to 93 °C (200 °F). Other shapes for the clip that fix the retaining clip 40 to the filter plate 4 without the use of a top hat clip (e.g., the top hat mounting clip 25) and without exposing the ends 32, 34 of the filter plate 4 to the screen 8 may be used without departing from the scope of the present disclosure. An optional seal can be made from a gasket material to prevent leaking around the ends 32, 34 of the filter plate 4. The seal may have a rectangular shape and may be disposed between a surface of the major concave area M and the leading end 32 of the filter plate 4. Other shapes, materials, and orientations may be used to provide the optional seal. For example, a shaped seal or an adhesive material such as RTV silicone may be applied between the bottom of the leading end 32 of the filter plate 4 and the horizontal body strip 61 of the S-clip 45 to create the seal. The seal strip may positioned on the leading end of the filter plate to minimize filtrate leakage from under the filter plate and rewetting the pulp mat once the vacuum to the filter plate is cut off.

It will be understood that the terms: "first horizontal strip 51," "first vertical strip 53," "first end 52 of the first vertical strip 53," "second end 54 of the first vertical strip 53," "horizontal body strip 61," "first end 56 of the horizontal body strip 61," "second end 60 of the horizontal body strip 61," "second vertical strip 55," "first end 58 of the second vertical strip 55," "second end 59 of the second vertical strip 55," and "a second horizontal strip 57" are used to refer to parts of the S-clip 45 regardless of how the S-clip 45 is manufactured. For example, an exemplary S-clip 45 can be fabricated from multiple strips of material. By way of another example, an exemplary S-clip 45 can be manufactured by bending a plate of material to adopt the "S" shaped form as described in this disclosure. For example, a second vertical strip 55 may be created by bending a plate of material back over itself. In such a case, the second vertical strip 55 is the section of plate connecting the substantially parallel horizontal body strip 61 and second horizontal strip 57.

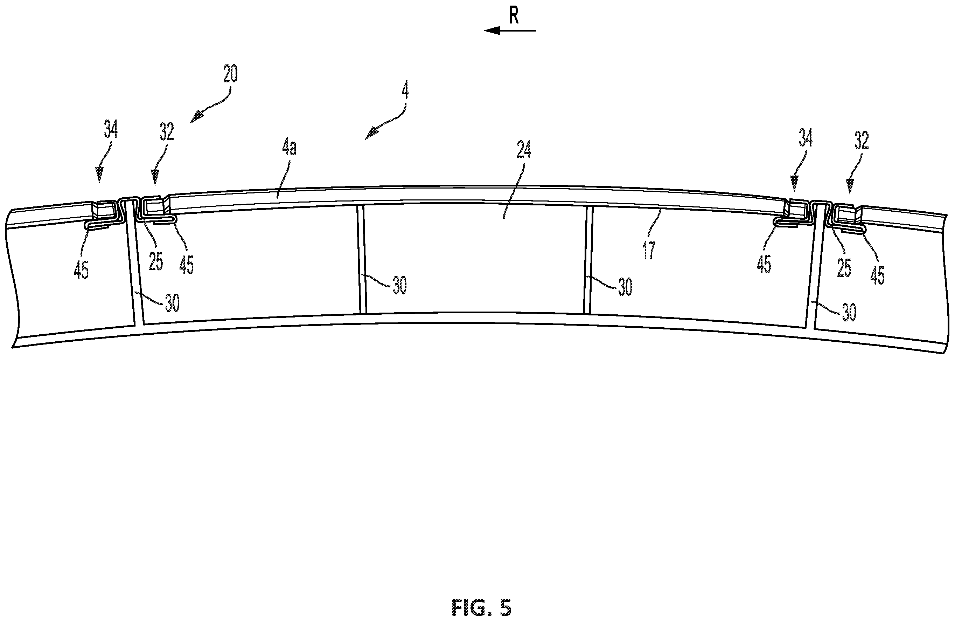

FIG. 5 is a cross-sectional side view of an exemplary filter deck assembly 20 including the exemplary engagement assembly 35 according to some aspects of the present disclosure. As illustrated in FIG. 5, two S-clips 45a, 45b may be disposed on each retaining clip 40. A first S-clip 45a engages the first shelf 71 of the retaining clip 40 and a trailing end 34 of an adjacent filter plate 4. A second S-clip 45b engages the second shelf 73 of the retaining clip 40 and engages a leading end 32 of a second adjacent filter plate 4'. The filter plates 4 and 4' may be corrugated filter plates 4a.

While this invention has been particularly shown and described with references to exemplary embodiments thereof, it will be understood by those skilled in the art that various changes in form and details may be made therein without departing from the scope of the invention encompassed by the appended claims.

## Claims

1. An engagement assembly (35) for engaging a filter plate (4) that spans at least one grid support (30) of a rotary drum filter (10), the engagement assembly (35) comprising:
a retaining clip (40) configured to be mounted on the grid support (30), the retaining clip (40) having a body (28), a first shelf (71) extending outwardly from the body (28) in a first direction and a second shelf (73) extending outwardly from the body (28) in a direction opposite the first direction;
**characterized in that**
the engagement assembly (35) further comprises an S-clip (45) for fixing the retaining clip (40) to the filter plate (4), the S-clip (45) having a major concave area (M) configured to receive a leading end (32) or a trailing end (34) of a filter plate (4), and a minor concave area (m) configured to receive the first shelf (71) or the second shelf (73) of the retaining clip (40) , wherein:
the major concave area (M) is disposed adjacent to the minor concave area (m),
the minor concave area (m) is separated from the major concave area by a body strip (61) of the S-clip (45), and
wherein the minor concave area (m) is disposed in a direction that is opposite of a direction of the major concave area (M).

2. The engagement assembly (35) of claim 1, wherein the S-clip (45) further comprises:
a first horizontal strip (51) configured to engage to a first vertical strip (53) at a first end (52) of the first vertical strip (53); and
a horizontal body strip (61) having a first end (56) configured to engage the first vertical strip (53) at a second end (54) of the first vertical strip (53),
wherein the first end (52) of the first vertical strip (53) is distally disposed from the second end (54) of the first vertical strip (53), and
wherein the first horizontal strip (51), first vertical strip (53), and horizontal body strip (61) define the major concave area (M).

3. The engagement assembly (35) of claim 2, wherein the S-clip (45) further comprises:
a second vertical strip (55) having a first end (58) and a second end (59), wherein the second end (59) of the second vertical strip (55) is configured to engage a second end (60) of the horizontal body strip (61); and
a second horizontal strip (57) configured to engage the first end (58) of the second vertical strip (55),
wherein the second end (60) of the horizontal body strip (61) is distally disposed from the first end (56) of the horizontal body strip (60),
wherein the second end (59) of the second vertical strip (55) is distally disposed from the first end (58) of the second vertical strip (55), and
wherein the second horizontal strip (57), the second vertical strip (55), and the horizontal body strip (61) define the minor concave area (m).

4. The engagement assembly (35) of claim 1, wherein the major concave area (M) surrounds a leading end (32) of the filter plate (4) or a trailing end (34) of the filter plate (4).

5. The engagement assembly (35) of claim 1, wherein a height of the major concave area (M) is greater than a height of the leading end (32) of the filter plate (4) and the trailing (34) end of the filter plate (4).

6. The engagement assembly (35) of claim 1, wherein the S-clip (45) comprises stainless steel or a polymer configured to be heat resistant up to 93 degrees Celsius (200 degrees Fahrenheit).

7. A filter deck assembly (20) for a rotary drum filter (10), the filter deck assembly (20) comprising:
a filter plate (4) having a leading end distally disposed from a trailing end; and
an engagement assembly (35) according to any one of claims 1-6, configured to engage the filter plate (4).

8. A rotary drum filter (10), comprising:
a filter deck assembly (20) according to claim 7; and
grid supports (30) configured to support the filter deck assembly (20).

## Patentansprüche

1. Einsatzanordnung (35) zum Eingriff mit einer Filterplatte (4), die mindestens eine Gitterstütze (30) eines Drehtrommelfilters (10) überspannt, wobei die Einsatzanordnung (35) umfasst:
eine Halteklammer (40), die zur Montage an der Gitterstütze (30) konfiguriert ist, wobei die Halteklammer (40) einen Körper (28), eine erste Ablage (71), die sich vom Körper (28) in einer ersten Richtung nach außen erstreckt, und eine zweite Ablage (73) aufweist, die sich vom Körper (28) in einer der ersten Richtung entgegengesetzten Richtung nach außen erstreckt;
**dadurch gekennzeichnet, dass**
die Einsatzanordnung (35) weiter eine S-Klammer (45) zum Befestigen der Halteklammer (40) an der Filterplatte (4) umfasst, wobei die S-Klammer (45) einen größeren konkaven Bereich (M) aufweist, der zum Aufnehmen eines vorderen Endes (32) oder eines hinteren Endes (34) einer Filterplatte (4) konfiguriert ist, und einen kleineren konkaven Bereich (m) aufweist, der zum Aufnehmen der ersten Ablage (71) oder der zweiten Ablage (73) der Halteklammer (40) konfiguriert ist, wobei:
der größere konkave Bereich (M) neben dem kleineren konkaven Bereich (m) angeordnet ist,
der kleinere konkave Bereich (m) vom größeren konkaven Bereich durch einen Körperstreifen (61) der S-Klammer (45) getrennt ist, und
wobei der kleinere konkave Bereich (m) in einer Richtung angeordnet ist, die der Richtung des größeren konkaven Bereichs (M) entgegengesetzt ist.

2. Einsatzanordnung (35) nach Anspruch 1, wobei die S-Klammer (45) weiter umfasst:
einen ersten horizontalen Streifen (51), der so konfiguriert ist, dass er an einem ersten Ende (52) des ersten vertikalen Streifens (53) in einen ersten vertikalen Streifen (53) eingreift; und
einen horizontalen Körperstreifen (61), der ein erstes Ende (56) aufweist, das so konfiguriert ist, dass es an einem zweiten Ende (54) des ersten vertikalen Streifens (53) in den ersten vertikalen Streifen (53) eingreift,
wobei das erste Ende (52) des ersten vertikalen Streifens (53) distal vom zweiten Ende (54) des ersten vertikalen Streifens (53) angeordnet ist, und
wobei der erste horizontale Streifen (51), der erste vertikale Streifen (53) und der horizontale Körperstreifen (61) den größeren konkaven Bereich (M) definieren.

3. Einsatzanordnung (35) nach Anspruch 2, wobei die S-Klammer (45) weiter umfasst:
einen zweiten vertikalen Streifen (55), der ein erstes Ende (58) und ein zweites Ende (59) aufweist, wobei das zweite Ende (59) des zweiten vertikalen Streifens (55) so konfiguriert ist, dass es in ein zweites Ende (60) des horizontalen Körperstreifens (61) eingreift; und
einen zweiten horizontalen Streifen (57), der so konfiguriert ist, dass er in das erste Ende (58) des zweiten vertikalen Streifens (55) eingreift,
wobei das zweite Ende (60) des horizontalen Körperstreifens (61) distal vom ersten Ende (56) des horizontalen Körperstreifens (60) angeordnet ist,
wobei das zweite Ende (59) des zweiten vertikalen Streifens (55) distal vom ersten Ende (58) des zweiten vertikalen Streifens (55) angeordnet ist, und
wobei der zweite horizontale Streifen (57), der zweite vertikale Streifen (55) und der horizontale Körperstreifen (61) den kleineren konkaven Bereich (m) definieren.

4. Einsatzanordnung (35) nach Anspruch 1, wobei der größere konkave Bereich (M) ein vorderes Ende (32) der Filterplatte (4) oder ein hinteres Ende (34) der Filterplatte (4) umgibt.

5. Einsatzanordnung (35) nach Anspruch 1, wobei eine Höhe des größeren konkaven Bereichs (M) größer ist als eine Höhe des vorderen Endes (32) der Filterplatte (4) und des hinteren Endes (34) der Filterplatte (4).

6. Einsatzanordnung (35) nach Anspruch 1, wobei die S-Klammer (45) rostfreien Stahl oder ein Polymer umfasst, das so konfiguriert ist, dass es bis zu 93 Grad Celsius (200 Grad Fahrenheit) hitzebeständig ist.

7. Filterdeckanordnung (20) für einen Drehtrommelfilter (10), wobei die Filterdeckanordnung (20) umfasst:
eine Filterplatte (4), die ein vorderes Ende aufweist, das distal von einem hinteren Ende angeordnet ist; und
eine Einsatzanordnung (35) nach einem der Ansprüche 1 bis 6, die zum Eingreifen in die Filterplatte (4) konfiguriert ist.

8. Drehtrommelfilter (10), umfassend:
eine Filterdeckanordnung (20) nach Anspruch 7; und
Gitterstützen (30), die zum Stützen der Filterdeckanordnung (20) konfiguriert sind.

## Revendications

1. Ensemble (35) de mise en prise pour la mise en prise d'une plaque (4) filtrante qui s'étend sur au moins un support (30) de grille d'un filtre (10) à tambour rotatif, l'ensemble (35) de mise en prise comprenant :
une pince (40) de retenue configurée pour être montée sur le support (30) de grille, la pince (40) de retenue ayant un corps (28), un premier plateau (71) s'étendant vers l'extérieur à partir du corps (28) dans une première direction et un deuxième plateau (73) s'étendant vers l'extérieur à partir du corps (28) dans une direction opposée à la première direction ;
**caractérisé en ce que**
l'ensemble (35) de mise en prise comprend en outre une pince (45) en S pour la fixation de la pince (40) de retenue sur la plaque (4) filtrante, la pince (45) en S ayant une zone (M) concave majeure configurée pour recevoir une extrémité (32) d'attaque ou une extrémité (34) de fuite d'une plaque (4) filtrante, et une zone (m) concave mineure configurée pour recevoir le premier plateau (71) ou le deuxième plateau (73) de la pince (40) de retenue, dans lequel :
la zone (M) concave majeure est disposée de manière adjacente à la zone (m) concave mineure,
la zone (m) concave mineure est séparée de la zone concave majeure par une bande (61) de corps de la pince (45) en S, et
dans lequel la zone (m) concave mineure est disposée dans une direction qui est à l'opposé d'une direction de la zone (M) concave majeure.

2. Ensemble (35) de mise en prise selon la revendication 1, dans lequel la pince (45) en S comprend en outre :
une première bande (51) horizontale configurée pour se mettre en prise avec une première bande (53) verticale à une première extrémité (52) de la première bande (53) verticale ; et
une bande (61) de corps horizontale ayant une première extrémité (56) configurée pour se mettre en prise avec la première bande (53) verticale à une deuxième extrémité (54) de la première bande (53) verticale,
dans lequel la première extrémité (52) de la première bande (53) verticale est disposée de manière distale par rapport à la deuxième extrémité (54) de la première bande (53) verticale, et
dans lequel la première bande (51) horizontale, la première bande (53) verticale et la bande (61) de corps horizontale définissent la zone (M) concave majeure.

3. Ensemble (35) de mise en prise selon la revendication 2, dans lequel la pince (45) en S comprend en outre :
une deuxième bande (55) verticale ayant une première extrémité (58) et une deuxième extrémité (59), dans lequel la deuxième extrémité (59) de la deuxième bande (55) verticale est configurée pour se mettre en prise avec une deuxième extrémité (60) de la bande (61) de corps horizontale ; et
une deuxième bande (57) horizontale configurée pour se mettre en prise avec la première extrémité (58) de la deuxième bande (55) verticale,
dans lequel la deuxième extrémité (60) de la bande (61) de corps horizontale est disposée de manière distale par rapport à la première extrémité (56) de la bande (60) de corps horizontale,
dans lequel la deuxième extrémité (59) de la deuxième bande (55) verticale est disposée de manière distale par rapport à la première extrémité (58) de la deuxième bande (55) verticale, et
dans lequel la deuxième bande (57) horizontale, la deuxième bande (55) verticale et la bande (61) de corps horizontale définissent la zone (m) concave mineure.

4. Ensemble (35) de mise en prise selon la revendication 1, dans lequel la zone (M) concave majeure encercle une extrémité (32) d'attaque de la plaque (4) filtrante ou une extrémité (34) de fuite de la plaque (4) filtrante.

5. Ensemble (35) de mise en prise selon la revendication 1, dans lequel une hauteur de la zone (M) concave majeure est supérieure à une hauteur de l'extrémité (32) d'attaque de la plaque (4) filtrante et de l'extrémité (34) de fuite de la plaque (4) filtrante.

6. Ensemble (35) de mise en prise selon la revendication 1, dans lequel la pince (45) en S comprend de l'acier inoxydable ou un polymère configuré pour être résistant à la chaleur jusqu'à 93 degrés Celsius (200 degrés Fahrenheit).

7. Ensemble (20) plateforme filtrante pour un filtre (10) à tambour rotatif, l'ensemble (20) plateforme filtrante comprenant :
une plaque (4) filtrante ayant une extrémité d'attaque disposée de manière distale par rapport à une extrémité de fuite ; et
un ensemble (35) de mise en prise selon l'une quelconque des revendications 1 à 6, configuré pour se mettre en prise avec la plaque (4) filtrante.

8. Filtre (10) à tambour rotatif, comprenant :
un ensemble (20) plateforme filtrante selon la revendication 7 ; et
des supports (30) de grille configurés pour porter l'ensemble (20) plateforme filtrante.
